# EUROPÄISCHE PATENTANMELDUNG

(11) **EP 3 722 648 A1**
(43) Veröffentlichungstag der Anmeldung: **14.10.2020**
(21) Anmeldenummer: 20168925.4
(22) Anmeldetag: 09.04.2020
(51) Int. Cl.: F16L 41/00, G01F 1/684

(54) **SENSORHALTESYSTEM UND SENSORSYSTEM**

(30) Priorität: 10.04.2019 DE 202019102063 U
(71) Anmelder: FlowVision GmbH, 90518 Altdorf (DE)
(72) Erfinder: Gliedstein, Norbert, 90530 Wendelstein (DE)
(74) Vertreter: FDST Patentanwälte

(57) **Zusammenfassung**

Ein Sensorhaltesystem (4) zur tiefenvariablen Fixierung eines Fluidsensors (2), der einen zylindrischen Einschiebeschaft (10) aufweist, in einer hygienekonformen Rohrleitung, weist auf:
- ein rohrartiges Anschlussstück (14) mit einem Verbindungsflansch (20), der zur Verbindung mit einem Gegenstück der bestehenden hygienekonformen Rohrleitung dient, wobei in das rohrartige Anschlussstück (14) im bestimmungsgemäßen Montagezustand der Einschiebeschaft (10) des Fluidsensors (2) eingeschoben ist, wobei das rohrartige Anschlussstück (14) in einem flanschseitigen Endabschnitt eine innenliegende, frontbündige Dichtungsnut (30) aufweist, und wobei das rohrartige Anschlussstück (14) ein dem Verbindungsflansch (20) abgewandtes Außengewinde (28) aufweist, wobei der Innendurchmesser des Anschlussstücks (14) den Außendurchmesser des Einschiebeschafts (10) nur geringfügig überschreitet,
- eine Überwurfmutter (38) mit einem zu dem Außengewinde (28) komplementären Innengewinde (40), und
- einen Fixierungsring (42), der im bestimmungsgemäßen Montagezustand über den Einschiebeschaft (10) des Fluidsensors (2) geschoben ist und zwischen dem Anschlussstück (14) und der Überwurfmutter (38) zur kraft- und/oder formschlüssigen Fixierung des Fluidsensors (2) in Schaftlängsrichtung verspannt ist.

## Beschreibung

Die Erfindung betrifft ein Sensorhaltesystem, insbesondere zur tiefenvariablen Fixierung eines Fluidsensors, sowie ein Sensorsystem umfassend einen Fluidsensor und das vorstehend genannte Sensorhaltesystem.

In vielen Bereichen, in denen Fluide in einem System aus Rohrleitungen und/oder Behältern gefördert und/oder gelagert werden, ist die Bestimmung charakteristischer Zustandsgrößen innerhalb der Rohrleitung bzw. des Behälters von Interesse, um die Förderung des jeweiligen Fluids überwachen oder messen zu können. Hierbei kommen Messungen verschiedener Prozessgrößen, bspw. Druck, Temperatur, Fließgeschwindigkeit und/oder der Durchflussmenge in Betracht. Häufig ist es dazu erforderlich, dass der zur Messung verwendete Sensor (im Folgenden als Fluidsensor bezeichnet) in einer bestimmten Position in der Rohrleitung oder dem entsprechenden Behälter platziert wird.

Insbesondere in der Lebensmittelindustrie, der Pharmaindustrie oder dergleichen müssen jedoch die Rohrleitungen bzw. Behälter vergleichsweise strengen Hygienevorgaben entsprechen und zweckmäßigerweise zur Erreichung eines aseptischen Zustands gereinigt und desinfiziert werden können. Dies ist teilweise nicht nur für Rohrleitungen bzw. Behälter, in denen das Lebensmittel selbst - beispielsweise ein Getränk, Joghurt oder dergleichen - geführt ist, sondern auch für zur Verarbeitung genutzte Prozessgase, wie zum Beispiel Sterilluft, Stickstoff oder gegebenenfalls andere inerte Gase (ggf. unter Druck) erforderlich. Zur Reinigung und Desinfektion kommen dabei beispielsweise Prozesse wie das sogenannte "CIP" (englisch für: "cleaning in place") und "SIP" (englisch für: "sterilization in place") zum Einsatz. Da hierbei die entsprechenden Reinigungs- und Desinfektionsmedien durch die zu reinigenden Rohrleitungen bzw. Behälter geleitet werden, sind strömungstechnische Toträume, in denen sich Keime bilden können und das üblicherweise geführte Fluid und/oder das Reinigungsmittel festsetzen kann, zu vermeiden.

Aus diesem Grund sind Strukturen, die in produktberührenden Bereichen nicht reinigbare Toträume oder Keimnester (z. B. Gewindegänge) aufweisen, untersagt. Deshalb werden häufig hygienische Flansch-Klemmverbindungen, zum Beispiel eine sogenannte Tri Clamp Verbindung oder auch eine Milchrohrverschraubung (oder auch andere, ähnlich geartete Verbindungen), genutzt. Häufig werden dabei die entsprechenden - häufig genormten - Flansche an die Fluidsensoren dauerhaft fest und dichtend angebunden (bspw. angeschweißt). Insbesondere für die Bestimmung des Durchflusses ist jedoch eine in Abhängigkeit von dem Durchmesser der Rohrleitung bzw. Behälter variable Eintauchtiefe des jeweiligen Fluidsensors in die Rohrleitung bzw. Behälter zweckmäßig. Hierbei ist allerdings wiederum eine hygienekonforme Abdichtung problematisch.

Der Erfindung liegt die Aufgabe zugrunde, die Halterung eines Fluidsensors in einer hygienekonformen Rohrleitung oder einem hygienekonformen Behälter zu verbessern.

Diese Aufgabe wird erfindungsgemäß gelöst durch ein Sensorhaltesystem mit den Merkmalen des Anspruchs 1. Des Weiteren wird diese Aufgabe erfindungsgemäß gelöst durch ein Sensorsystem mit den Merkmalen des Anspruchs 9. Weitere vorteilhafte und teils für sich erfinderische Ausführungsformen und Weiterbildungen der Erfindung sind in den Unteransprüchen und der nachfolgenden Beschreibung dargelegt.

Das erfindungsgemäße Sensorhaltesystem dient zur tiefenvariablen Fixierung eines Fluidsensors, der einen zylindrischen (insbesondere einen kreiszylindrischen, rotationssymmetrischen) Einschiebeschaft aufweist, in einer hygienekonformen Rohrleitung oder in einem hygienekonformen Behälter. Dazu weist das Sensorhaltesystem ein rohrartiges Anschlussstück auf, das wiederum einen Verbindungsflansch aufweist, der zur Verbindung mit einem insbesondere komplementären Gegenstück der bestehenden hygienekonformen Rohrleitung bzw. des Behälters eingerichtet ist. In das rohrartige Anschlussstück ist dabei im bestimmungsgemäßen Montagezustand des Sensorhaltesystems und des Fluidsensors der Einschiebeschaft des Fluidsensors eingeschoben. Das rohrartige Anschlussstück weist außerdem in einem flanschseitigen Endabschnitt eine frontbündige, innenliegende Dichtungsnut auf, die vorzugsweise zur Aufnahme eines Dichtungsmittels eingerichtet ist. Ferner weist das rohrartige Anschlussstück ein dem Verbindungsflansch abgewandtes Außengewinde auf. Außerdem überschreitet der Innendurchmesser des Anschlussstücks den Außendurchmesser des Einschiebeschafts nur geringfügig. Des Weiteren weist das Sensorhaltesystem eine Überwurfmutter auf, die ein zu dem Außengewinde des Anschlussstücks komplementäres Innengewinde aufweist. Außerdem weist das Sensorhaltesystem einen Fixierungsring auf, der im bestimmungsgemäßen Montagezustand über den Einschiebeschaft des Fluidsensors geschoben ist und zwischen dem Anschlussstück und der Überwurfmutter zur kraft- und/oder formschlüssigen Fixierung des Fluidsensors in Schaftlängsrichtung verspannt ist.

Zur Vereinfachung wird nachfolgend der Begriff (hygienekonforme) "Rohrleitung", stellvertretend auch für den (hygienekonformen) Behälter verwendet, in dem der Fluidsensor eingesetzt werden soll.

Unter dem Begriff "hygienekonform" wird hier und im Folgenden insbesondere verstanden, dass die Rohrleitung für bestimmte Industriezweige vorgegebenen Hygieneanforderungen entspricht. Vorzugsweise ist diese Rohrleitung dabei unter aseptischen Bedingungen einsetzbar. Entsprechend ist vorzugsweise auch das Sensorhaltesystem zum Einsatz in einer solchen hygienekonformen Rohrleitung eingerichtet und vorgesehen, insbesondere unter aseptischen Bedingungen betreibbar.

Unter dem Begriff "frontbündige Dichtungsnut" wird hier und im Folgenden insbesondere eine Dichtungsnut verstanden, die mit einem im Vergleich zur Längserstreckung des Anschlussstücks geringfügigen (insbesondere um wenigstens das 10-Fache, vorzugsweise das 20-Fache, bevorzugt mehr als das 30-Fache kleiner als die Längserstreckung) Abstand zur Dichtfläche des Verbindungsflanschs angeordnet ist.

Unter dem Begriff "geringfügig" wird insbesondere im Zusammenhang mit dem Unterschied des Innendurchmessers des Anschlussstücks zu dem Außendurchmesser des Einschiebeschafts vorzugsweise verstanden, dass das dadurch im bestimmungsgemäßen Montagezustand gebildete Spiel zwischen dem Anschlussstück und dem Einschiebeschaft derart gering ist, dass eine Längsverschiebung des Einschiebeschafts in dem Anschlussstück ohne eine Verkeilung, Verklemmung oder eines abrasiven Reibens beim Einschieben des Einschiebeschafts in dem Anschlussstück gerade noch möglich ist.

Aufgrund der frontbündigen Dichtungsnut zur Aufnahme des Dichtungsmittels, die wie vorstehend beschrieben vorzugsweise mit geringfügigem Abstand zur Dichtfläche des Verbindungsflanschs angeordnet ist, ist eine axiale Dichtung des Einschiebeschafts mit keinem oder zumindest nur einem vernachlässigbaren Totraum - nämlich zwischen der Dichtfläche des Verbindungsflanschs und der Dichtungsnut selbst, d. h. also zwischen einem, die Dichtungsnut von der Dichtfläche beabstandenden Dichtungssteg und dem Einschiebeschaft - möglich. Somit ermöglicht das Sensorhaltesystem eine Verstellung der Eintauchtiefe des Fluidsensors in der bestehenden Rohrleitung bei dennoch hygienekonformer Abdichtung. Somit kann insbesondere eine starre, insbesondere stoffschlüssige Anbindung des Verbindungsflanschs an den Fluidsensor selbst - was eine Abstimmung jeweils eines Fluidsensors auf den konkreten Einsatzfall erforderlich macht - entfallen. Somit wird durch das erfindungsgemäße Sensorhaltesystem auch eine hohe Flexibilität hinsichtlich eines Einsatzes in verschiedenen Rohrleitungen mit unterschiedlichem Durchmesser (und somit unterschiedlicher Eintauchtiefe des Fluidsensors) erreicht.

In einer zweckmäßigen Ausführung ist als Dichtungsmittel in der Dichtungsnut ein Dichtring eingelegt. Dieser Dichtring ist beispielsweise aus einem Silikon, einem Polytetrafluorethylen (PTFE) oder einem anderen, insbesondere für die Lebensmittelindustrie geeigneten und zugelassenen, vorzugsweise gummielastischen Dichtungsmaterial gebildet.

In einer bevorzugten Ausführung ist die frontbündige Dichtungsnut von der Dichtfläche des Verbindungsflanschs um kleiner oder gleich einen Millimeter beabstandet. Vorzugsweise beträgt der Abstand zwischen der Dichtfläche und der Dichtungsnut kleiner oder gleich 0,7, weiter vorzugsweise kleiner oder gleich 0,5 Millimeter. Als Abstand zwischen der Dichtfläche des Verbindungsflanschs und der Dichtungsnut wird hierbei insbesondere der axiale Abstand zwischen der Dichtfläche und dem "Beginn", d. h. der der Dichtfläche nächstliegenden (zumindest etwa radial zur Rohrachse verlaufende) Flanke der Dichtungsnut verstanden. Mithin ist zwischen der Dichtungsnut und der Dichtfläche der vorstehend genannte Dichtungssteg gebildet, dessen Stärke dem Abstand zwischen der Dichtungsnut und der Dichtfläche entspricht. Aufgrund der Kombination dieses geringen Abstands zwischen der Dichtfläche und der Dichtungsnut sowie des geringfügigen Spiels zwischen dem Einschiebeschaft und dem Anschlussstück kann vorteilhafterweise ein Totraum auf ein vernachlässigbares Maß, insbesondere ein den Hygienevorgaben entsprechend geringes Maß verringert werden. Der Dichtungssteg verhindert vorteilhafterweise bei der Montage des Einschiebeschafts in dem Anschlussstück, dass das in die Dichtungsnut eingelegte Dichtungsmittel aus der Dichtungsnut herausgedrückt wird.

In einer zweckmäßigen Variante ist das Dichtungsmittel, insbesondere der Dichtring hinsichtlich seiner Materialeigenschaften (bspw. Shore-Härte, Elastizität, Reibungsbeiwert) sowie der Spalt zwischen dem Dichtungssteg und dem Einschiebeschaft derart gewählt, dass das Dichtungsmittel im bestimmungsgemäßen Montagezustand durch den Einschiebeschaft auch in den Spalt zwischen dem Dichtungssteg und dem Einschiebeschaft verdrängt wird. Dadurch wird dieser Spalt weiter verkleinert, was wiederum der Vermeidung eines Keime beherbergenden Totraums zuträglich ist.

In einer bevorzugten Ausführung überschreitet der Innendurchmesser des Anschlussstücks den Außendurchmesser des Einschiebeschafts um etwa 0,2 Millimeter.

In einer bevorzugten Ausführung handelt es sich bei dem Fixierungsring um einen Klemmring. D. h. der Klemmring wird bei Verschraubung des Anschlussstücks mit der Überwurfmutter verspannt und dabei (insbesondere plastisch) verformt, sodass eine radiale Klemmwirkung auf den Einschiebeschaft des Fluidsensors ausgeübt wird. Der Klemmring ist optional aus einem Kunststoff (z. B. PTFE) oder einem Metall ausgebildet. Optional kann - insbesondere bei einem metallischen Klemmring - auch eine Deformation des Einschiebeschafts und somit zusätzlich eine formschlüssige Fixierung des Fluidsensors erfolgen.

In einer alternativen Ausführung handelt es sich bei dem Fixierungsring um einen sogenannten Schneidring. Dieser wird vergleichbar zu dem vorstehend beschriebenen Klemmring durch Verschraubung der Überwurfmutter mit dem Anschlussstück deformiert, gräbt sich dabei jedoch in den Einschiebeschaft des Fluidsensors ein, sodass eine formschlüssige Halterung erfolgt.

In einer zweckmäßigen Ausführung ist zwischen dem Verbindungsflansch des Anschlussstücks und dem Außengewinde außenseitig ein Antriebsprofil, vorzugsweise ein Außensechskant (-Profil) angeordnet. Vorzugsweise ist dieses Antriebsprofil auf der Außenseite des Anschlussstücks (insbesondere einstückig, d. h. monolithisch) ausgebildet oder ausgeformt. Das Antriebsprofil dient dabei insbesondere dazu, bei der Verschraubung der Überwurfmutter mit dem Anschlussstück ein entsprechendes Werkzeug, beispielsweise einen Rohrschlüssel, Maulschlüssel oder dergleichen anzusetzen, um einem Drehmoment bei der Verschraubung der Überwurfmutter entgegenzuwirken. Alternativ zu dem Außensechskant oder einem anderen polygonalen Antriebsprofil sind außenseitig Nuten in das Anschlussstück eingeformt, um mittels eines Hakenschlüssels gegenhalten zu können.

Weiter vorzugsweise ist in die Dichtfläche des Verbindungsflanschs eine in Axialrichtung geöffnete (weitere) Dichtungsnut eingearbeitet, die zur Aufnahme einer Radialdichtung zwischen dem Verbindungsflansch und dem korrespondierenden Gegenstück der Rohrleitung dient.

In einer weiteren zweckmäßigen Ausführung ist an einem im bestimmungsgemäßen Montagezustand von dem Anschlussstück abgewandten Ende der Überwurfmutter innenseitig eine (wiederum weitere) Dichtungsnut eingeformt, in der im bestimmungsgemäßen Montagezustand ein Dichtmittel, vorzugsweise ein Dichtring einliegt. Diese Dichtungsnut ist mithin insbesondere in Zusammenwirkung mit dem eingelegten Dichtmittel dazu eingerichtet und vorgesehen, den in dem Anschlussstück und der Überwurfmutter aufgenommenen Bereich des Einschiebeschafts zur Außenseite hin abzudichten. Insbesondere ist diese Dichtungsnut analog zu der vorstehend beschriebenen frontbündigen Dichtungsnut ausgebildet. Vorzugsweise weist das Sensorhaltesystem außerdem einen weiteren Dichtring auf, der im bestimmungsgemäßen Montagezustand außenseitig zwischen dem Anschlussstück und der Überwurfmutter angeordnet ist, und mittels dessen das Außengewinde des Anschlussstücks fluiddicht zur Außenseite des Sensorhaltesystems hin abgedichtet ist. Durch diesen weiteren Dichtring sowie die weitere Dichtungsnut mit dem eingelegten Dichtmittel in der Überwurfmutter ist somit auch die Außenseite des Sensorhaltesystems hygienekonform ausgeführt, insbesondere offenliegende Strukturen, die eine Keimablagerung ermöglichen, vermieden.

Vorzugsweise ist der Fluidsensor in der bestimmungsgemäßen Einbausituation an einem Rohrabzweig der bestehenden Rohrleitung angeschlossen und ragt dabei mit seinem Einschiebeschaft entlang des Rohrabzweigs bis in die (Haupt-) Rohrleitung, in der mittels des Fluidsensors gemessen werden soll. Dabei ist folglich ein Spalt zwischen der Rohrinnenwand der Rohrleitung, konkret des Rohrabzweigs und dem Einschiebeschaft gebildet, dessen Spalttiefe insbesondere der Rohrlänge des Rohrabzweigs (vom Anschlussflansch bis in die Hauptrohrleitung) entspricht. In einer weiteren zweckmäßigen Ausführung ist für einen solchen Einbaufall der Innendurchmesser des Anschlussstücks derart gewählt, dass in der bestimmungsgemäßen Einbausituation des Fluidsensors in der hygienekonformen Rohrleitung ein Aspektverhältnis dieses Spalts - d. h. einem Verhältnis der Spaltbreite zu der Rohrlänge des Rohrabzweigs (d. h. der Spalttiefe) - insbesondere den Hygienevorgaben der Rohrleitung selbst entspricht. D. h. der Spalt zwischen dem Einschiebeschaft und der Rohrinnenwand des Rohrabzweigs ist vorzugsweise derart bemessen, dass dieser keinen Totraum für das in der Rohrleitung geführte Fluid bildet. Insbesondere ist dieser Spalt - hinsichtlich seiner Spaltbreite und Spalttiefe - derart bemessen, dass der Spalt bei einer entsprechenden, den Hygienevorgaben entsprechenden Reinigung der Rohrleitung durchspült werden kann. Insbesondere wird der Spalt, insbesondere dessen Spaltbreite bei großer Rohrlänge des Rohrabzweigs (d. h. bei großer Spalttiefe) größer gewählt, sodass das Aspektverhältnis möglichst gering bleibt. Vorzugsweise wird das Aspektverhältnis dabei im Bereich um eins oder kleiner eingestellt um einen Totraum zu vermeiden.

Das erfindungsgemäße Sensorsystem umfasst den vorstehend beschriebenen Fluidsensor sowie das vorstehend beschriebene Sensorhaltesystem. D. h. das Sensorsystem umfasst den Fluidsensor, der den vorzugsweise kreiszylindrischen Einschiebeschaft aufweist, mit dem der Fluidsensor mit einer variabel vorgebbaren Eintauchtiefe in das Anschlussstück eingeschoben ist. Außerdem ist der Fluidsensor mittels der Überwurfmutter und dem Fixierungsring in seiner Eintauchtiefe fixiert in dem Anschlussstück gehalten.

Das erfindungsgemäße Sensorsystem weist mithin die vorstehend im Zusammenhang mit dem Sensorhaltesystem beschriebenen Merkmale und Vorteile gleichermaßen auf.

In einer bevorzugten Ausführung handelt es sich bei dem Fluidsensor um einen kalorimetrischen Durchflusssensor. Eine Eintauchtiefe dessen sensitiver Elemente in die Rohrleitung wird dabei von dem jeweiligen Durchmesser der Rohrleitung bestimmt.

Alternativ handelt es sich bei dem Fluidsensor um einen Temperatursensor oder einen Drucksensor.

Die Konjunktion "und/oder" ist hier und im Folgenden insbesondere derart zu verstehen, dass die mittels dieser Konjunktion verknüpften Merkmale sowohl gemeinsam als auch als Alternativen zueinander ausgebildet sein können.

Unter "Kraftschluss" oder einer "kraftschlüssigen Verbindung" zwischen wenigstens zwei miteinander verbundenen Teilen wird hier und im Folgenden insbesondere verstanden, dass die miteinander verbundenen Teile aufgrund einer zwischen ihnen wirkenden Reibkraft gegen ein Abgleiten aneinander gehindert sind. Fehlt eine diese Reibkraft hervorrufende "Verbindungskraft" (d. h. die Kraft, die die Teile gegeneinander drückt, bspw. eine Schraubenkraft, Klemmkraft oder die Gewichtskraft selbst), kann die kraftschlüssige Verbindung nicht aufrecht erhalten und somit gelöst werden.

Unter "Formschluss" oder einer "formschlüssigen Verbindung" zwischen wenigstens zwei miteinander verbundenen Teilen wird hier und im Folgenden insbesondere verstanden, dass der Zusammenhalt der miteinander verbundenen Teile zumindest in einer Richtung durch ein unmittelbares Ineinandergreifen von Konturen der Teile selbst oder durch ein mittelbares Ineinandergreifen über ein zusätzliches Verbindungsteil erfolgt. Das "Sperren" einer gegenseitigen Bewegung in dieser Richtung erfolgt also formbedingt.

Unter "Stoffschluss" oder einer "stoffschlüssigen Verbindung" zwischen wenigstens zwei miteinander verbundenen Teilen wird hier und im Folgenden insbesondere verstanden, dass die miteinander verbundenen Teile an Ihren Kontaktflächen durch stoffliche Vereinigung oder Vernetzung (bspw. aufgrund von atomaren oder molekularen Bindungskräften) ggf. unter Wirkung eines Zusatzstoffs zusammengehalten werden.

Nachfolgend werden Ausführungsbeispiele der Erfindung anhand einer Zeichnung näher dargestellt. Darin zeigen:
- Fig. 1: in einer schematischen Seitenansicht ein Sensorsystem gebildet durch einen Fluidsensor und ein Sensorhaltesystem,
- Fig. 2: in einer schematischen Perspektivansicht ein Anschlussstück des Sensorhaltesystems,
- Fig. 3: in einer schematischen Draufsicht das Anschlussstück,
- Fig. 4: in einer schematischen Schnittdarstellung IV-IV gemäß Fig. 3 das Anschlussstück,
- Fig. 5: in Ansicht gemäß Fig. 4 ein alternatives Ausführungsbeispiel des Anschlussstücks,
- Fig. 6: in einem ausschnitthaft vergrößerten Längsschnitt das Sensorsystem, und
- Fig. 7: in Ansicht gemäß Fig. 6 ein weiteres Ausführungsbeispiel des Sensorsystems.

Einander entsprechende Teile sind in allen Figuren stets mit gleichen Bezugszeichen versehen.

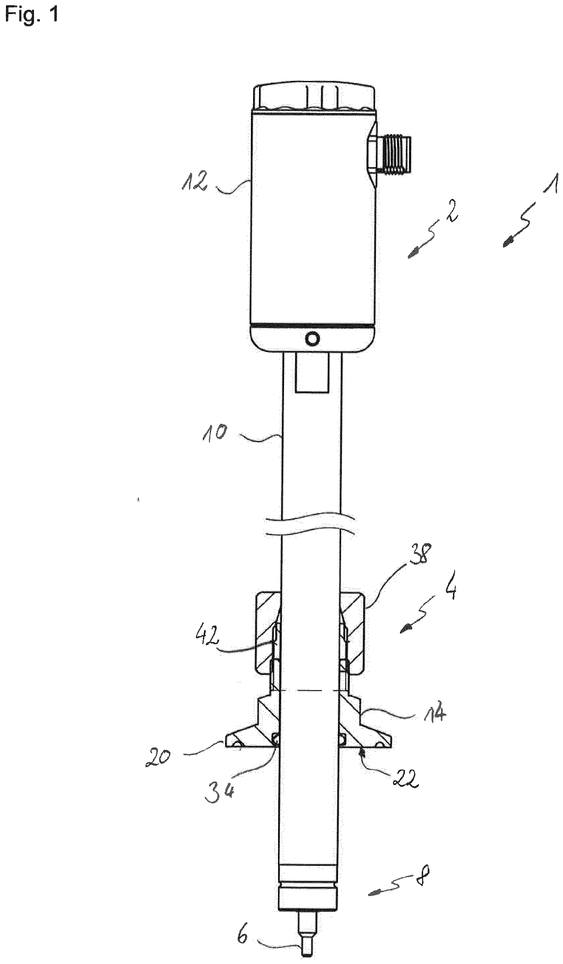

In Fig. 1 ist schematisch ein Sensorsystem 1 dargestellt. Dieses umfasst einen Fluidsensor 2 sowie ein Sensorhaltesystem 4. Das Sensorhaltesystem 4 dient dabei zum Einbau des Fluidsensors 2 sowie zu dessen tiefenvariabler Halterung in einer nicht näher dargestellten hygienekonformen Rohrleitung.

Der Fluidsensor 2 ist gebildet durch einen kalorimetrischen Durchflusssensor, der zwei Thermofühler 6 (in Fig. 1 ist davon nur einer sichtbar) aufweist. Die Thermofühler 6 sind an einem Einschubende 8 eines Einschiebeschafts 10 des Fluidsensors 2 angeordnet. Im bestimmungsgemäßen Montagezustand tauchen die beiden Thermofühler 6 dabei etwa senkrecht zur Strömungsrichtung in das in der Rohrleitung strömende Fluid ein. Der Fluidsensor 2 umfasst des Weiteren eine Sensorelektronik 12, die am dem Einschubende 8 entgegengesetzten Ende des Einschiebeschafts 10 angeordnet ist und zur Verschaltung des Fluidsensors 2 mit einer übergeordneten Steuereinheit dient.

Die Sensorelektronik 12 kann in einem optionalen Ausführungsbeispiel (nicht näher dargestellt) auch entfallen. In diesem Fall ist lediglich ein Steckverbinder zur Verschaltung an dem Einschiebeschaft 10 angeordnet.

In einem Vormontagezustand des Fluidsensors 2 in dem Sensorhaltesystem 4 ist der Fluidsensor 2 mit seinem Einschiebeschaft 10 in Längsrichtung gegenüber dem Sensorhaltesystem 4 verschiebbar. Dadurch kann der Fluidsensor 2, konkret dessen Thermofühler 6 mit einer variablen Eintauchtiefe in dem in der Rohrleitung strömenden Fluid positioniert werden und somit bei Rohrleitungen mit unterschiedlichen Durchmessern zum Einsatz kommen. Üblicherweise wird der Fluidsensor 2 dabei mittels des Sensorhaltesystems 4 in einem T-artigen Rohrabzweig eingebaut und ragt dabei entlang des Rohrabzweigs in den Haupt-Strömungskanal der Rohrleitung hinein.

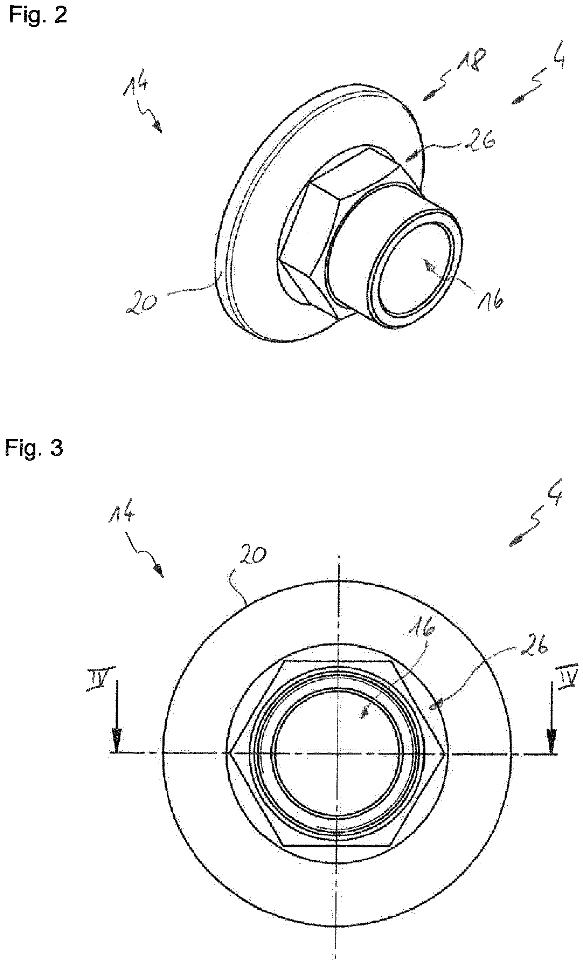

Das Sensorhaltesystem 4 umfasst ein in den Figuren 2-4 näher dargestelltes Anschlussstück 14. Dieses Anschlussstück 14 weist einen kreiszylindrischen Rohrabschnitt 16 auf, an den an einem Verbindungsende 18 ein Verbindungsflansch 20 nach Art einer sogenannten "Tri Clamp Verbindung" angeformt ist. Der Verbindungsflansch 20 weist auf seiner Verbindungseite eine Dichtfläche 22 auf, mit der das Anschlussstück 14 im bestimmungsgemäßen Montagezustand - optional unter Zwischenlagerung einer Dichtungsscheibe - an einem komplementären Verbindungsflansch der bestehenden Rohrleitung anliegt. In die Dichtfläche 22 ist dabei in bekannter Weise eine Dichtungsnut 24 eingearbeitet. Zur Verbindung werden dabei beide Flansche mittels einer Art Schelle zusammengehalten. An den Verbindungsflansch 20 schließt an der Außenseite des Anschlussstücks 14 ein Antriebsprofil 26 in Form eines Außensechskants an. Am dem Verbindungsende 18 abgewandten Ende des Anschlussstücks 14 ist ein Außengewinde 28 ausgebildet.

Der Innendurchmesser des Anschlussstücks 14 übersteigt den Außendurchmesser des Einschiebeschafts 10 dabei geringfügig, bspw. um etwa 0,2 Millimeter. Im dargestellten Ausführungsbeispiel beträgt der Außendurchmesser des Einschiebeschafts 10 beispielhaft 18 Millimeter, der Innendurchmesser des Anschlussstücks 14 18,2 Millimeter.

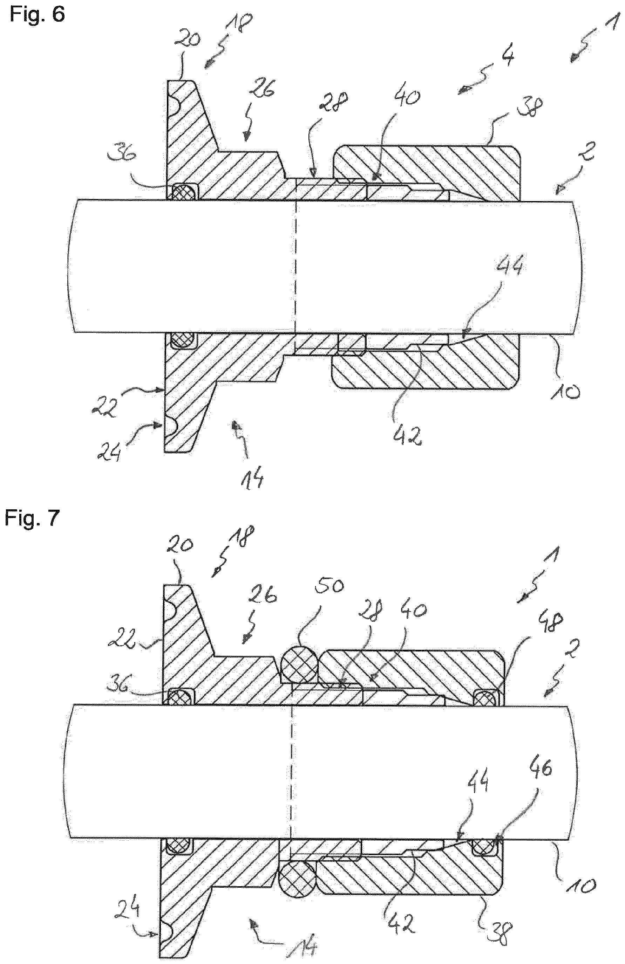

Am Verbindungsende 18 des Anschlussstücks 14 ist außerdem innenseitig eine frontbündige Dichtungsnut 30 in das Anschlussstück 14 eingearbeitet. Diese ist mit einem geringfügigen Abstand zur Dichtfläche 22 von weniger oder gleich 0,7 Millimeter ausgebildet. Konkret ist der Abstand dabei von der Dichtfläche 22 zur der Dichtfläche 20 nächstliegenden Flanke 32 der Dichtungsnut 30 bemessen. Im bestimmungsgemäßen Montagezustand liegt in der Dichtungsnut 30 ein Dichtmittel in Form eines Dichtrings 34 (vergleiche Fig. 6) ein.

Wie in Fig. 6 dargestellt, ist im bestimmungsgemäßen Montagezustand der Fluidsensor 2 mit seinem Einschiebeschaft 10 durch das Anschlussstück 14 hindurch geschoben. Der in der Dichtungsnut 30 eingelegte Dichtring 34 dichtet dabei den Einschiebeschaft 10 in axialer Richtung ab. Aufgrund des geringfügigen Abstands der Dichtungsnut 30 zur Dichtfläche 22 ist ein Totraum, in dem sich Prozessfluid aus der Rohrleitung ansammeln kann und bei einer Reinigung unzugänglich wäre, vermieden.

Zur axialen Fixierung des Fluidsensors 2 weist das Sensorhaltesystem 4 neben dem Anschlussstück 14 eine Überwurfmutter 38 auf, die ein zu dem Außengewinde 28 komplementäres Innengewinde 40 umfasst. Das Innengewinde 40 ist dabei nur über einen Teil der Längserstreckung der Überwurfmutter 38 ausgebildet. Des Weiteren weist das Sensorhaltesystem 4 einen Fixierungsring in Form eines Klemmrings 42 auf. Dieser Klemmring 42 wird bei Verschraubung der Überwurfmutter 38 mit dem Anschlussstück 14 aufgrund einer entsprechend ausgeformten Innenkontur 44 der Überwurfmutter 38 deformiert und übt dadurch eine Klemmwirkung auf den Einschiebeschaft 10 aus, sodass bei hinreichend starker Verschraubung der Überwurfmutter 38 mit dem Anschlussstück 14 eine axiale Verschiebung des Einschiebeschafts 10 in dem Sensorhaltesystem 4 unterbunden ist.

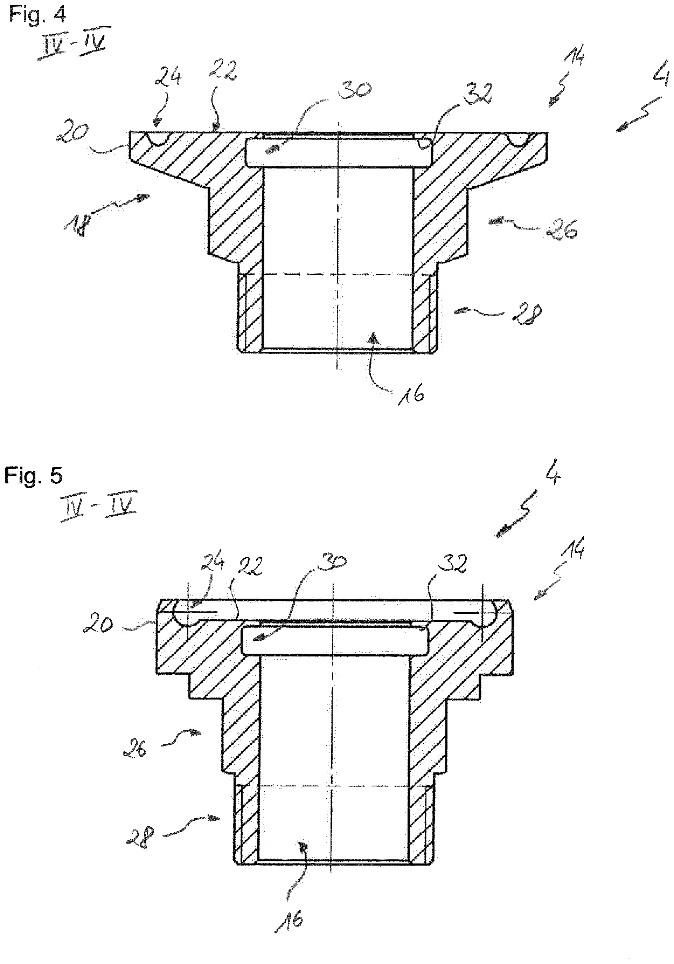

In Fig. 5 ist ein alternatives Ausführungsbeispiel des Anschlussstücks 14 dargestellt. In diesem Fall ist die Dichtfläche 22 des Verbindungsflanschs 20 axial zurückversetzt und endet in der Dichtungsnut 24. Diese Ausgestaltung ist etwa vergleichbar zu einer landläufig auch unter "Milchrohr-Verbindung" bekannten Verbindung.

In Fig. 7 ist wiederum ein weiteres Ausführungsbeispiel des Sensorsystems 1, konkret des Sensorhaltesystems 4 dargestellt. In diesem Fall ist in die Überwurfmutter 38 eine innenliegende Dichtungsnut 46 am dem Innengewinde 40 gegenüberliegenden Ende eingeformt. In dieser Dichtungsnut 46 liegt im bestimmungsgemäßen Montagezustand als Dichtmittel ein Dichtring 48 ein, der die Überwurfmutter 38 rückseitig gegenüber dem Einschiebeschaft 10 abdichtet. Die Ausbildung und Funktion dieser Dichtungsnut 46 ist hierbei analog zu der Abdichtung des Verbindungsflansches 20 auf der Fluidseite, d. h. analog zur frontbündigen Dichtungsnut 30. Zwischen dem Anschlussstück 14 und der Überwurfmutter 38 ist außerdem ein weiterer Dichtring 50 angeordnet, der zwischen der Überwurfmutter 38 und dem Anschlussstück 14 gequetscht ist und dadurch zur Abdichtung des Außengewindes 28 gegenüber der Umgebung führt und somit ebenfalls eine hygienekonforme Außenkontur des Sensorhaltesystems 4 ermöglicht.

Der Gegenstand der Erfindung ist nicht auf die vorstehend beschriebenen Ausführungsbeispiele beschränkt. Vielmehr können weitere Ausführungsformen der Erfindung von dem Fachmann aus der vorstehenden Beschreibung abgeleitet werden. Insbesondere können die anhand der verschiedenen Ausführungsbeispiele beschriebenen Einzelmerkmale der Erfindung und deren Ausgestaltungsvarianten auch in anderer Weise miteinander kombiniert werden.

### Bezugszeichenliste

- 1: Sensorsystem
- 2: Fluidsensor
- 4: Sensorhaltesystem
- 6: Thermofühler
- 8: Einschubende
- 10: Einschiebeschaft
- 12: Sensorelektronik
- 14: Anschlussstück
- 16: Rohrabschnitt
- 18: Verbindungsende
- 20: Verbindungsflansch
- 22: Dichtfläche
- 24: Dichtungsnut
- 26: Antriebsprofil
- 28: Außengewinde
- 30: Dichtungsnut
- 32: Flanke
- 34: Dichtring
- 38: Überwurfmutter
- 40: Innengewinde
- 42: Klemmring
- 44: Innenkontur
- 46: Dichtungsnut
- 48: Dichtring
- 50: Dichtring

## Patentansprüche

1. Sensorhaltesystem (4) zur tiefenvariablen Fixierung eines Fluidsensors (2), der einen zylindrischen Einschiebeschaft (10) aufweist, in einer hygienekonformen Rohrleitung, aufweisend
- ein rohrartiges Anschlussstück (14) mit einem Verbindungsflansch (20), der zur Verbindung mit einem Gegenstück der bestehenden hygienekonformen Rohrleitung dient, wobei in das rohrartige Anschlussstück (14) im bestimmungsgemäßen Montagezustand der Einschiebeschaft (10) des Fluidsensors (2) eingeschoben ist, wobei das rohrartige Anschlussstück (14) in einem flanschseitigen Endabschnitt eine innenliegende, frontbündige Dichtungsnut (30) aufweist, und wobei das rohrartige Anschlussstück (14) ein dem Verbindungsflansch (20) abgewandtes Außengewinde (28) aufweist, wobei der Innendurchmesser des Anschlussstücks (14) den Au-ßendurchmesser des Einschiebeschafts (10) nur geringfügig überschreitet,
- eine Überwurfmutter (38) mit einem zu dem Außengewinde (28) komplementären Innengewinde (40), und
- einen Fixierungsring (42), der im bestimmungsgemäßen Montagezustand über den Einschiebeschaft (10) des Fluidsensors (2) geschoben ist und zwischen dem Anschlussstück (14) und der Überwurfmutter (38) zur kraft- und/oder formschlüssigen Fixierung des Fluidsensors (2) in Schaftlängsrichtung verspannt ist.

2. Sensorhaltesystem (4) nach Anspruch 1,
mit einem Dichtring (34), der in der Dichtungsnut (30) einliegt.

3. Sensorhaltesystem (4) nach Anspruch 1 oder 2,
wobei die Dichtungsnut (30) von der Dichtfläche (22) des Verbindungsflanschs (20) um kleiner oder gleich 1 Millimeter, insbesondere um kleiner oder gleich 0,7 Millimeter, besonders bevorzugt um kleiner oder gleich 0,5 Millimeter beabstandet ist.

4. Sensorhaltesystem (4) nach einem der Ansprüche 1 bis 3,
wobei der Innendurchmesser des Anschlussstücks (14) den Außendurchmesser des Einschiebeschafts (10) um etwa 0,2 Millimeter übersteigt.

5. Sensorhaltesystem (4) nach einem der Ansprüche 1 bis 4,
wobei es sich bei dem Fixierungsring um einen Klemmring (42) handelt.

6. Sensorhaltesystem (4) nach einem der Ansprüche 1 bis 5,
wobei zwischen dem Verbindungsflansch (20) des Anschlussstücks (14) und dem Außengewinde (38) außenseitig ein Antriebsprofil (26), insbesondere ein Außensechskant angeordnet ist.

7. Sensorhaltesystem (4) nach einem der Ansprüche 1 bis 6,
wobei an einem im bestimmungsgemäßen Montagezustand von dem Anschlussstück (14) abgewandten Ende der Überwurfmutter (38) innenseitig eine Dichtungsnut (46) eingeformt ist, in der im bestimmungsgemäßen Montagezustand ein Dichtmittel (48) einliegt, und wobei im bestimmungsgemäßen Montagezustand außenseitig zwischen dem Anschlussstück (14) und der Überwurfmutter (38) ein weiterer Dichtring (50) zur fluiddichten Abdichtung des Außengewindes (28) des Anschlussstücks (14) angeordnet ist.

8. Sensorhaltesystem (4) nach einem der Ansprüche 1 bis 7,
wobei der Innendurchmesser des Anschlussstücks (14) derart gewählt ist, dass in der bestimmungsgemäßen Einbausituation in der hygienekonformen Rohrleitung ein Aspektverhältnis eines Spalts zwischen dem Einschiebeschaft (10) des Fluidsensors (2) und einer Rohrinnenwand eines Rohrabzweigs, an dem das Anschlussstück (14) angeschlossen ist, Hygienevorgaben entspricht.

9. Sensorsystem (1) mit einem Fluidsensor (2) und mit einem Sensorhaltesystem (4) nach einem der Ansprüche 1 bis 8, wobei der Fluidsensor (2) einen zylindrischen Einschiebeschaft (10) aufweist, mit dem der Fluidsensor (2) in das Anschlussstück (14) mit einer variabel vorgebbaren Eintauchtiefe eingeschoben und mittels der Überwurfmutter (38) und des Fixierungsrings (42) in seiner Eintauchtiefe fixiert gehalten ist.

10. Sensorsystem (1),
wobei es sich bei dem Fluidsensor um einen kalorimetrischen Durchflusssensor (2) handelt.
